# EUROPEAN PATENT APPLICATION

(11) **EP 4 362 373 A1**
(43) Date of publication of application: **01.05.2024**
(21) Application number: 22889460.6
(22) Date of filing: 07.11.2022
(51) Int. Cl.: H04L 5/00

(54) **REFERENCE SIGNAL RECEIVING AND SENDING METHODS, FIRST COMMUNICATION NODE, SECOND COMMUNICATION NODE, AND MEDIUM**

(30) Priority: 08.11.2021 CN 202111314492
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); WU, Hao, Shenzhen, Guangdong 518057 (CN); JIANG, Chuangxin, Shenzhen, Guangdong 518057 (CN)
(74) Representative: Tiburzi, Andrea
(86) International application number: PCT/CN2022/130224
(87) International publication number: WO 2023/078439

(57) **Abstract**

Provided are a reference signal receiving and sending method, a first communication node, a second communication node, and a medium. The method includes that: first configuration information is received, where the first configuration information includes a reference signal pattern; and a reference signal is received according to the first configuration information.

## Description

### TECHNICAL FIELD

The present application relates to the technical field of wireless communication networks, for example, to a reference signal receiving and sending method, a first communication node, a second communication node, and a medium.

### BACKGROUND

A reference signal may be used for channel estimation of a physical channel. The physical channel includes, but is not limited to, a physical shared channel for transmitting data, a physical control channel for transmitting physical layer signaling, and a physical random access channel for random access. The physical channel may be further divided into uplink and downlink according to a direction of the link. To improve the accuracy of the channel estimation, each reference signal may generally correspond to multiple resource elements (REs), for example, each port of a reference signal of a demodulation reference signal type 1 occupies 6 REs. Moreover, the artificial intelligence technology has strong feature extraction capability, and may obtain the better performance at a lower RE density. On this basis, a pilot pattern of the reference signal is more diversified. Under the scene of various pilot patterns, how to accurately transmit the reference signal and how to obtain the better channel estimation performance by using pilot patterns with different RE densities become a problem to be solved by the reference signal.

### SUMMARY

The present application provides a reference signal receiving and sending method, a first communication node, a second communication node, and a medium so as to achieve the receiving of the reference signal.

An embodiment of the present application provides a reference signal receiving method. The method includes that: first configuration information is received, where the first configuration information includes a reference signal pattern; and a reference signal is received according to the first configuration information.

An embodiment of the present application further provides a reference signal sending method.

The method includes that: first configuration information is sent, where the first configuration information includes a reference signal pattern; and a reference signal is sent according to the first configuration information.

An embodiment of the present application further provides a first communication node. The first communication node includes a memory, a processor, and a computer program stored on the memory and operable on the processor. The program, when executed by the processor, implements the reference signal receiving method described above.

An embodiment of the present application further provides a second communication node. The second communication node includes a memory, a processor, and a computer program stored on the memory and operable on the processor. The program, when executed by the processor, implements the reference signal sending method described above.

An embodiment of the present application further provides a computer-readable storage medium storing a computer program. The program, when executed by a processor, implements the reference signal receiving method described above.

### BRIEF DESCRIPTION OF DRAWINGS

FIG. 1 is a schematic diagram of a reference signal pattern according to an embodiment;
FIG. 2 is a schematic diagram of another reference signal pattern according to an embodiment;
FIG. 3 is a flowchart of a reference signal receiving method according to an embodiment;
FIG. 4 is a flowchart of a reference signal sending method according to an embodiment;
FIG. 5 is a schematic structural diagram of a reference signal receiving device according to an embodiment;
FIG. 6 is a schematic structural diagram of a reference signal sending device according to an embodiment;
FIG. 7 is a schematic diagram of a hardware structure of a first communication node according to an embodiment; and
FIG. 8 is a schematic diagram of a hardware structure of a second communication node according to an embodiment.

### DETAILED DESCRIPTION

The present application will be described below in conjunction with the accompanying drawings and embodiments. It should be understood that specific embodiments described herein are merely illustrative of the present application and are not intended to limit the present application. It should be noted that the embodiments and features of the embodiments of the present application may be combined in any combination with each other without conflict. Additionally, it should be noted that, for ease of description, only some, but not all, structures related to the present application have been shown in the drawings.

In order to improve the performance of a wireless communication system, the multi-antenna technology is widely applied to various wireless communication systems. The multi-antenna technology includes, but is not limited to, multiple-input-multiple-output (MIMO) and multiple-transmission node-joint transmission (JT). In the multi-antenna technology, a terminal side may demodulate multi-layer data by using a reference signal. In order to support different numbers of data layer multiplexing, channel scenarios with different mobile speeds, and flexible user scheduling, the reference signal may have a variety of different pilot patterns (namely, reference signal patterns), for example, the reference signal include reference signal patterns on different additional position symbols, reference signal patterns with different maximum symbol lengths, and reference signal patterns with different reference signal categories, where the category of the reference signal may be a Type1 based on interleaved frequency domain multiplexing (IFDM) or a Type2 based on frequency domain orthogonal covering code (FD-OCC).

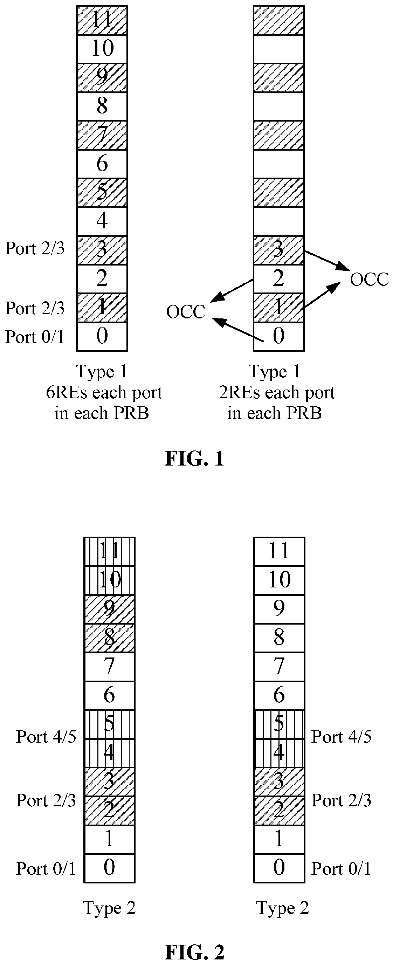

FIG. 1 is a schematic diagram of a reference signal pattern according to an embodiment. FIG. 1 shows reference signal patterns of two different RE densities based on IFDM, a maximum number of symbols is 1, and an RE density of a left reference signal pattern is greater than an RE density of a right reference signal pattern. FIG. 2 is a schematic diagram of another reference signal pattern according to an embodiment. FIG. 2 shows pilot patterns of two different RE densities based on FD-OCC. The RE density of the left reference signal pattern is greater than the RE density of the right reference signal pattern. Further, a reference signal pattern of a low density may be subdivided into reference signal patterns at different densities, reference signal patterns having a maximum length of 1 and a maximum length of 2 may be provided, and reference signal patterns in which 0, 1 or 2 symbols are added may be provided. For different reference signal patterns, various configurations such as pilot sequences exist.

With the advent of artificial intelligence receivers and the development of receiver-related technologies, more diverse reference signal patterns are supported. To improve the accuracy of channel estimation, each reference signal port generally corresponds to multiple REs, for example, one port of a reference signal of Type1 corresponds to at least 6 REs. In this embodiment, the density of the reference signal RE can be further reduced in a case of equivalent estimation precision, so that the better channel estimation performance can be obtained by using less RE. This means the coexistence of reference signal patterns of various RE densities. The method provided in this embodiment aims to accurately transmit the reference signal for multiple coexisting reference signal patterns, and to improve the performance of channel estimation.

In this embodiment, a first communication node may perform a channel estimation based on a reference signal sent by a second communication node. The first communication node mainly refers to a terminal-side apparatus such as a user equipment (UE), and the user equipment may be a cellular telephone, a cordless telephone, a personal digital assistant (PDA), a handheld apparatus having a wireless communication function, a computing apparatus or other processing apparatuses connected to a wireless modem, an in-vehicle apparatus, a wearable apparatus, or a terminal apparatus in a wireless network, an unmanned aerial vehicle, a handset, and the like. The second communication node mainly refers to a network-side apparatus such as a base station, and the base station may be an evolutional node B (eNB or eNodeB) in long term evolution (LTE) and long term evolution advanced (LTE-A), a base station apparatus represented by a new radio (NR) air interface, or a base station in a future communication system, and the like. The base station may include various macro stations, micro base stations, home base stations, wireless remote stations, routers, or various network-side devices such as a primary cell and a secondary cell.

In this embodiment, higher-layer signaling includes, but is not limited to, radio resource control (RRC) signaling and media access control control element (MAC CE) signaling.

In this embodiment, the reference signal may be a demodulation reference signal (DMRS) for signal or data demodulation, or may be a channel state information reference signal (CSI-RS) for estimating a channel or interference. The reference signal has various patterns to accommodate different port numbers, different moving speeds, different symbol types, different slot sizes (such as slots including 1 to 14 symbols), different terminals and orthogonal coverage codes, and the like.

In this embodiment, an index and an indicator are equivalent.

In this embodiment, the transmission includes sending or receiving.

In an embodiment of the present application, a reference signal receiving method is provided, in this method, the first communication node may specify the reference signal pattern by receiving the first configuration information, so that the reference signal is accurately received according to the reference signal pattern.

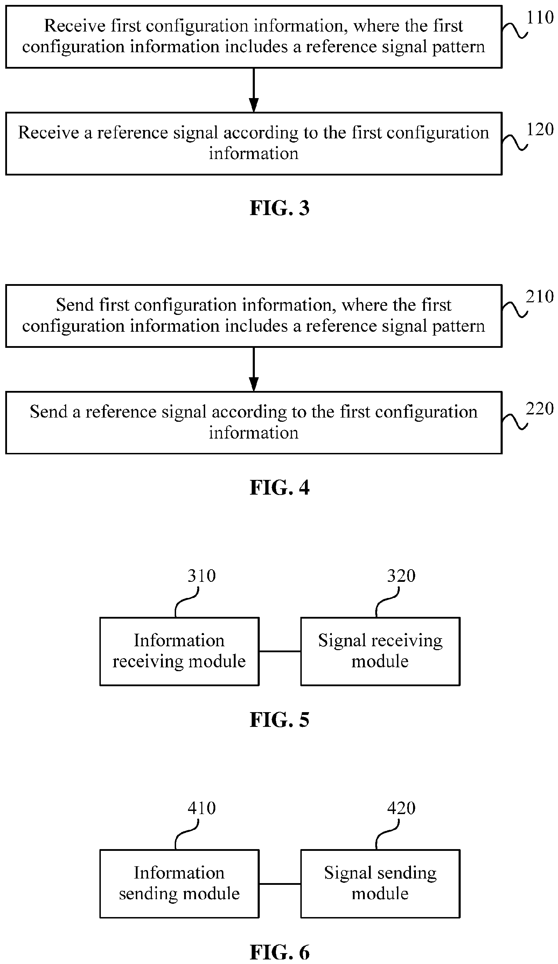

FIG. 3 is a flowchart of a reference signal receiving method according to an embodiment. As shown in FIG. 3, the method provided in this embodiment includes a process 110 and a process 120.

In process 110, first configuration information is received, where the first configuration information includes a reference signal pattern.

In process 120, a reference signal is received according to the first configuration information.

In this embodiment, the first configuration information may be sent by the second communication node to the first communication node, and the first configuration information may include multiple parameters regarding the reference signal so as to notify the transmission configuration of the reference signal to the first communication node. The first configuration information includes the reference signal pattern, and may further include a sending period, a sending power, and the like of the reference signal. The reference signal pattern may be used for indicating an RE for transmitting the reference signal, the RE is a minimum time-frequency resource for transmitting one modulation symbol and includes a frequency-domain subcarrier and a radio resource on a symbol, and the symbol may be an orthogonal frequency division multiplexing (OFDM) symbol, an orthogonal frequency division multiple access (FDMA) symbol, a single-carrier frequency division multiple access (SC-FDMA) symbol, and the like. The first communication node can specify ports and REs and the like corresponding to the reference signal according to the first configuration information, so as to accurately receive the reference signal.

In this embodiment, the first configuration information may be determined by the second communication node according to the uplink data transmission condition; the first configuration information may also be determined in such a manner that the first communication node reports parameters related to the reference signal to the second communication node, and then the second communication node determines the first configuration information based on these reference signal parameters; and the first configuration information may also be determined in such a manner that the second communication node firstly provides multiple sets of reference signal parameters to the first communication node, then the first communication node selects one set of reference signal parameter from the multiple sets of reference signal parameters and reports the one set of reference signal parameter to the second communication node, and the second communication node determines the first configuration information based on the reported one set of reference signal parameter. On this basis, various reference signal patterns may be supported in the wireless communication process, so that the transmission of the reference signal is more flexible.

In an embodiment, before the process 110, the method further includes processes described below.

In process 101, second configuration information is acquired, where the second configuration information includes M sets of configuration information, and M is an integer greater than 1.

In process 103, one set of configuration information is selected from the second configuration information as target configuration information, where the target configuration information is used to determine the first configuration information.

In this embodiment, the second configuration information may be sent by the second communication node to the first communication node, the second configuration information may include M (M > 1) sets of configuration information, each set of configuration information includes at least one reference signal parameter, and the at least one reference signal parameter includes a reference signal pattern and may also include a sending period, sending power, and the like of the reference signal. The first communication node may select one set of configuration information from the M sets of configuration information according to the downlink data transmission situation as the target configuration information, the first communication node may send an index of the selected set of configuration information to the second communication node, and the second communication node may determine selected target configuration information according to the index of the configuration information, and further determine the first configuration information.

In an embodiment, the first configuration information and the target configuration information include at least one reference signal parameter having a same value, the first configuration information includes at least one reference signal parameter, and the target configuration information includes at least one reference signal parameter.

In this embodiment, the reference signal parameters in the first configuration information and the target configuration information may be the same, or may not be the same, that is, the second communication node may determine the first configuration information according to the target configuration information. In this process, part of the reference signal parameters in the target configuration information may be modified, but it is ensured that at least one reference signal parameter is consistent with the target configuration information sent by the first communication node.

In an embodiment, before the process 110, the method further includes a process 111.

In process 111, target configuration information is sent, where the target configuration information is used to determine the first configuration information.

In this embodiment, the target configuration information may be autonomously determined by the first communication node according to the downlink data transmission situation and may be sent to the second communication node, and the second communication node determines the first configuration information according to the target configuration information. The first configuration information and the target configuration information include at least one reference signal parameter having a same value.

In an embodiment, the first configuration information is determined by the second communication node. In this embodiment, the first configuration information may be determined by the second communication node according to the uplink data transmission situation.

In an embodiment, the first configuration information further includes at least one of: a reference signal sending period, slot bias information, a reference signal sequence, reference signal sending power, or indication information for adding a position symbol to the reference signal.

In this embodiment, the first configuration information may further include a sending period of the reference signal, slot bias information (slot position at which the reference signal is sent), a reference signal sequence, reference signal sending power, and/or indication information for adding a position symbol to the reference signal.

In an embodiment, the reference signal pattern at least includes a first density pattern and a second density pattern.

In this embodiment, the reference signal pattern includes at least two types, i.e., a first density pattern and a second density pattern, and the first density pattern and the second density pattern correspond to different reference signal RE densities. On this basis, various reference signal patterns may be supported in the wireless communication process, and the transmission of reference signals of different densities can be achieved.

In an embodiment, a number of reference signal resource elements corresponding to the second density pattern is less than a number of reference signal resource elements corresponding to the first density pattern.

In an embodiment, the second density pattern may be referred to as a low density pattern, and the first density pattern may be referred to as a high density pattern or a common density pattern.

In an embodiment, the first density pattern corresponds to the first reference signal and the second density pattern corresponds to the second reference signal. The communication node estimates the demodulation channel according to the first reference signal and the second reference signal.

In this embodiment, the reference signal pattern includes at least two types, i.e., a first density pattern and a second density pattern. The first density pattern and the second density pattern correspond to different reference signal RE densities, where a number of reference signal REs corresponding to the first density pattern is relatively large, and the density corresponding to the first density pattern is also relatively high. In this embodiment, in a case of an artificial intelligence receiver, the density of the reference signal RE can be reduced, for example, a reference signal pattern of a lower density may be used on the basis of Type 1 and Type 2, so that better channel estimation performance may be obtained with less RE. In this case, the first density pattern may refer to reference signal patterns of Type 1 and Type 2 (reference signal patterns of different densities as shown in FIGS. 1 and 2), and the second density pattern may refer to a reference signal pattern of a lower density relative to Type 1 and Type 2.

In an embodiment, before the reference signal is received, the method further includes a process 113.

In process 113, trigger signaling or activation signaling is sent, where the trigger signaling or the activation signaling is used to trigger or activate a first reference signal corresponding to the first density pattern.

In this embodiment, the second communication node may send the first reference signal to the first communication node according to the first density pattern, and specifically may trigger or activate the first reference signal by receiving trigger signaling or activation signaling of the first communication node.

In an embodiment, the number of reference signal resource elements corresponding to the first density pattern is N times the number of reference signal resource elements corresponding to the second density pattern, and N > 1. For example, the reference signal RE corresponding to the first density pattern may be 2, 4, or 8 times the reference signal RE corresponding to the second density pattern.

In an embodiment, the first reference signal corresponding to the first density pattern is in correlation with the second reference signal corresponding to the second density pattern.

In an embodiment, the first reference signal being in correlation with the second reference signal includes one of the following meanings: the first reference signal and the second reference signal have an association relationship, or the first reference signal and the second reference signal are sent to a same communication node (base station or terminal), the first reference signal and the second reference signal have a binding relationship, or the first reference signal and the second reference signal have a corresponding relationship.

In an embodiment, the first reference signal corresponding to the first density pattern being in correlation with the second reference signal corresponding to the second density pattern, and the correlation includes at least one of: a first reference signal and a second reference signal having a same precoding are correlated; a first reference signal and a second reference signal having a same quasi-co-location configuration are correlated; a first reference signal and a second reference signal having a same Transmission Configuration Indicator (Transmission Configuration Indication) are correlated; a first reference signal and a second reference signal having a same Transmission Configuration Indicator state are correlated; a first reference signal and a second reference signal having a same quasi-co-location type are correlated; a first reference signal and a second reference signal having a same port index are correlated; or a first reference signal and a second reference signal sent to a same first communication node (such as, terminal) are correlated.

In an embodiment, after the process 120, the method further includes a process 130.

In process 130, a channel estimation quality is determined according to the first reference signal corresponding to the first density pattern and the second reference signal corresponding to the second density pattern.

In an embodiment, after the process 120, the method further includes a process 140.

In process 140, a demodulation channel is determined according to the first reference signal corresponding to the first density pattern and the second reference signal corresponding to the second density pattern.

In this embodiment, the second communication node may send the first reference signal to the first communication node according to the first density pattern, and may also send the second reference signal to the first communication node according to the second density pattern. The first communication node may determine the demodulation channel by performing a channel estimation according to at least one of the received first reference signal or the received second reference signal.

In an embodiment, the channel estimation is performed according to at least one of the first reference signal and the second reference signal, and the channel estimation quality is then determined based on an error between the estimated channel information and real channel information (such as channel information acquired by the first reference signal).

In an embodiment, a channel estimation quality is determined in such a manner that data is demodulated to obtain a bit error rate or a block error rate.

In an embodiment, the process 140 includes a process 1410, a process 1420 and a process 1430.

In process 1410, a first sub-channel estimation module performs a channel estimation on the second reference signal to obtain channel estimation information.

In process 1420, the channel estimation information and channel estimation information corresponding to the first reference signal are linearly added or concatenated as an input of a second sub-channel estimation module.

In process 1430, the demodulation channel is determined according to an output of the second sub-channel estimation module.

In this embodiment, the first communication node may determine the channel estimation quality by using two sub-channel estimation modules, where an input of the first sub-channel estimation module is a second reference signal and an output of the first sub-channel estimation module is channel estimation information for the second reference signal. Then, the channel estimation information corresponding to the first reference signal may be linearly added to the channel estimation information (the data dimension remains unchanged, which may be formally understood as the addition of elements of the corresponding position in the matrix or vector) or concatenated (the data dimension may change, which may be formally understood as the extension of the matrix or vector, for example, the concatenation of the A matrix and the B matrix to form new matrices [A, B]), and then input it to the second sub-channel estimation module, an output of the second sub-channel estimation module is the final channel estimation information, and the demodulation channel may be determined according to the final channel estimation information. Further, the channel estimation quality may be determined according to the error between the channel estimation information and the real channel information.

In an embodiment, the first reference signal corresponds to L1 REs, and the L1 REs correspond to the first channel, where L1 is a positive integer. The second reference signal corresponds to L2 REs, and the L2 REs correspond to the second channel, where L2 is a positive integer, and L1 is greater than L2. A difference set of the first channel and the second channel is a channel corresponding to L1 to L2 REs.

The process 1330 includes that: a loss between the channel estimation information corresponding to the L1 to L2 REs and the difference set is compared in the output of the second sub-channel estimation module. If the loss is less than or equal to a threshold value, then the channel estimation quality is one level. If the loss is greater than a threshold value, then the channel estimation quality is two levels, where the channel estimation quality of the one level is superior to the channel estimation quality of the two levels.

In this embodiment, the channel estimation quality is determined by a loss between the channel estimation information corresponding to the difference set of the first channel and the second channel (that is, the L1-L2 REs described above) and the channel itself corresponding to the L1 to L2 REs among the channel estimation information output by the second sub-channel estimation module. If the loss is less than or equal to a threshold value, then the channel estimation quality is better; otherwise, the channel estimation quality is relatively poor.

The transmission of the reference signal is exemplified by different embodiments.

### Embodiment one

In this embodiment, the first communication node (such as, a terminal) may select the target configuration information from the second configuration information sent by the second communication node (such as, a base station), and send the target configuration information to the second communication node, and the second communication node determines the first configuration information based on this. The base station and the terminal complete the configuration of a reference signal parameter by the following processes.

In process 1, the base station configures second configuration information (including configuration information of M sets of reference signal parameters) through higher-layer signaling.

In this embodiment, the higher-layer signaling includes, but is not limited to, RRC and MAC CE signaling, such as a demodulation reference signal downlink configuration (DMRS-DownlinkConfig) via RRC, a configuration in the DMRS-DownlinkConfig is extended to a list form, or one demodulation reference signal downlink configuration list (DMRS-DownlinkConfigList) is added for indicating a configuration index of the DMRS-DownlinkConfig, multiple sets of DMRS-DownlinkConfig are configured in RRC signaling, a field is added in the higher-layer signaling of each DMRS-DownlinkConfig for indicating a configuration index (DMRS-DownlinkConfigID), for example, a value range of DMRS-DownlinkConfigID is 0-K, where K is a number of reference signal patterns, and M < = K. Each set of configuration information includes one reference signal pattern.

In this embodiment, other reference signal parameters may also be configured in DMRS-DownlinkConfig, including but not limited to an enumeration of several fixed reference signal patterns, for example, Type3 is added to represent a low density pattern of the IDFM technology, and Type4 is used to represent a FD-OCC-based low density pattern, where the low density pattern means that: in case of IDFM-based, a number of REs occupied each DMRS port on each symbol on each physical resource block (PRB) is less than 6 REs, such as 1 RE, 2 REs, 3 REs, 4 REs; in a case of FD-OCC, a number of REs occupied by each DMRS port on each symbol on each PRB is less than 4 REs, such as 1 RE and 2 REs. It should be appreciated that Type 1 and Type 2 correspond to the first density pattern, and Type3 and Type 4 correspond to the second density pattern.

Moreover, it is also possible to use a separate instruction for indicating a low density pattern (a second density pattern), such as a demodulation reference signal resource element type (dmrs-REType) instruction, this instruction may be an enumerated type or an integer comb and may be used for indicating the size of the comb, or this instruction is a decimal number and is used for indicating a proportion of DMRS RE corresponding to the second density pattern to DMRS RE corresponding to the first density pattern, for example DMRS RE in the second density pattern is 1/2, 1/3, 1/4 and the like of DMRS RE in the first density pattern.

In addition, each set of configuration information of the base station may further include a reference signal sequence, a reference signal sending period, whether a reference signal has additional added symbols, and the like.

In process 2, the terminal receives the configuration information of the M sets of reference signal parameters, and selects one set of configuration information as the target configuration information to be sent to the base station according to a receiving condition of the downlink data.

The terminal determines whether the second density pattern is suitable for use according to its own capability and receiving condition of downlink data, for example, whether the artificial intelligence estimation channel is supported, whether the received channel has a large time-varying characteristic or frequency-domain selective fading, and whether a Signal to Interference plus Noise Ratio (SINR) is sufficiently high. If the time-varying of the channel is large, or the frequency-domain selective fading changes rapidly, or the SINR is less than a set threshold, or the artificial intelligence estimation channel is not supported, then the configuration information including the first density pattern is selected as the target configuration information; otherwise, the configuration information including the second density pattern is selected as the target configuration information.

The terminal may also determine the reference signal sending period according to the channel change speed, and determine whether additional symbols for sending the reference signal need to be added according to the moving speed. A most matched set of reference signal parameters is selected from the configuration information of the M sets of reference signal parameters configured by the base station according to the channel information as the target configuration information, and a configuration information index or indication corresponding to the target configuration information is sent to the base station through reference signal parameter configuration signaling, where the terminal may send the target configuration information to the base station through at least one of higher-layer signaling or physical layer signaling.

In process 3, the base station receives the target configuration information sent by the terminal, determines the first configuration information according to the target configuration information, and transmits a reference signal according to the first configuration information.

Reference signal parameter configuration signaling sent by the terminal is received by the base station through at least one of the higher-layer signaling or the physical layer signaling, and an indication or configuration information corresponding to the reference signal parameter configuration signaling is indexed, the target configuration information (for determining the first configuration information) suitable for the terminal is found from the configuration information of the M sets of reference signal parameters, a value of each parameter of the reference signal is determined according to the first configuration information, the reference signal is obtained according to the value, and the reference signal is sent.

In some examples, the first configuration information and the target configuration information are the same.

Optionally, the base station may adjust the reference signal parameter in the target configuration information sent by the terminal according to the scheduling requirements of the base station, so that the first configuration information may be different from the reference signal parameter in the target configuration information sent by the terminal to some extent, and the first configuration information is sent to the terminal again.

In process 4, the terminal receives the first configuration information and receives the reference signal according to the first configuration information.

A time-frequency resource and a received slot of the reference signal is determined by the terminal according to the first configuration information configured by the base station, the reference signal is received on the determined slot and the time-frequency resource, then channel information Hp corresponding to the reference signal is estimated according to a sequence of the reference signal, a port configuration, and the like, a channel Hd corresponding to an RE for transmitting signaling or data is estimated according to the channel information Hp, and data or signaling on the RE is demodulated according to the Hd, where the Hd is a demodulation channel.

It should be noted that the reference signal used in this embodiment may be a downlink DMRS, which is also applicable to CSI-RS, only DMRS-DownlinkConfig in the RRC configuration signaling needs to be changed to a channel state information reference signal resource mapping (CSI-RS-ResourceMapping), and a channel state information reference signal RE type (csiRs-REType) is added so as to indicate whether the low density CSI-RS (second density pattern) is enabled. If enabled, the RE density of the CSI-RS may be reduced by N times to become the original 1/N, where N may be an integer such as 2, 4, 8, and thus, for CSI-RS of M1 port, it actually represents the CSI-RS port of N*M1. Of course, the value of N, or 1/N, may also be indicated directly to indicate that low density CSI-RS is enabled, and the RE density is the original 1/N.

### Embodiment two

In this embodiment, the first communication node (such as, a terminal) may autonomously determine a set of reference signal parameters as target configuration information and send the set of reference signal parameters to the second communication node (such as, a base station). In this process, the base station does not configure configuration information of multiple sets of reference signal parameters. The base station and the terminal complete the configuration of the reference signal parameter by the following processes.

In process 1, the terminal determines configuration information of a set of reference signal parameters as target configuration information according to a receiving condition of downlink data, and sends the configuration information to the base station.

In this embodiment, configuration information (i.e., target configuration information) of the reference signal parameter may be sent by at least one of higher-layer signaling or physical layer signaling. The higher-layer signaling includes, but is not limited to, at least one of RRC or MAC CE. The terminal, in at least one of the higher-layer signaling or the physical layer signaling, indicates at least one reference signal parameter including, but not limited to, an enumeration of several fixed reference signal patterns, for example, Type3 is added to represent a low density pattern of the IDFM technology, and Type4 is used to represent a FD-OCC-based low density pattern, where the low density pattern means that: in case of IDFM-based, a number of REs occupied each DMRS port on each symbol on each PRB is less than 6 REs, such as 1 RE, 2 REs, 3 REs, 4 REs; in a case of FD-OCC, a number of REs occupied by each DMRS port on each symbol on each PRB is less than 4 REs, such as 1 RE and 2 REs. It should be appreciated that Type 1 and Type 2 correspond to the first density pattern, and Type3 and Type 4 correspond to the second density pattern.

Moreover, it is also possible to use a separate instruction for indicating a low density pattern (a second density pattern), such as a demodulation reference signal resource element type (dmrs-REType) instruction, this instruction may be an enumerated type or an integer comb and may be used for indicating the size of the comb, or this instruction is a decimal number and is used for indicating a proportion of DMRS RE corresponding to the second density pattern to DMRS RE corresponding to the first density pattern, for example DMRS RE in the second density pattern is 1/2, 1/3, 1/4 and the like of DMRS RE in the first density pattern.

In addition, each set of configuration information of the base station may further include a reference signal sequence, a reference signal sending period, whether a reference signal has added symbols, and the like.

The terminal determines whether the second density pattern is suitable for use according to its own capability and receiving condition of downlink data, for example, whether the artificial intelligence estimation channel is supported, whether the received channel has a large time-varying characteristic or frequency-domain selective fading, and whether a SINR is sufficiently high. If the time-varying of the channel is large, or the frequency-domain selective fading changes rapidly, or the SINR is less than a set threshold, or the artificial intelligence estimation channel is not supported, then the configuration information including the first density pattern is selected as the target configuration information; otherwise, the configuration information including the second density pattern is selected as the target configuration information.

The terminal may also determine the reference signal sending period according to the channel change speed, and determine whether additional symbols for sending the reference signal need to be added according to the moving speed. Configuration information of the reference signal parameter is determined as the target configuration information according to the channel information, the target configuration information is sent to the base station via the reference signal parameter configuration signaling, and the terminal may send the target configuration information to the base station via at least one of high-layer signaling or physical layer signaling.

If only the reference signal type needs to be sent, the terminal may indicate whether it supports the low density pattern through signaling.

In process 2, the base station receives the target configuration information sent by the terminal, and transmits the reference signal according to the target configuration information.

Reference signal parameter configuration signaling sent by the terminal is received by the base station through at least one of the higher-layer signaling or the physical layer signaling, that is, the target configuration information, the configuration information (that is, first configuration information) of the reference signal parameter of the terminal is determined according to the target configuration information and its own scheduling condition, a value of each parameter of the reference signal is determined according to the first configuration information, the reference signal is obtained according to the value, and the reference signal is sent.

In process 3, the terminal receives the first configuration information and receives the reference signal according to the first configuration information.

A time-frequency resource and a received slot of the reference signal is determined by the terminal according to the first configuration information configured by the base station, the reference signal is received on the determined slot and the time-frequency resource, then channel information Hp corresponding to the reference signal is estimated according to a sequence of the reference signal, a port configuration, and the like, a channel Hd corresponding to an RE for transmitting signaling or data is estimated according to the channel information Hp, and data or signaling on the RE is demodulated according to the Hd, where the Hd is a demodulation channel.

It should be noted that the reference signal used in this embodiment may be a downlink DMRS, which is also applicable to CSI-RS, only configuration information for DMRS needs to be changed to configuration information for CSI-RS, for example, a channel state information reference signal RE type (csiRs-REType) is added so as to indicate whether the low density CSI-RS (second density pattern) is enabled. If enabled, the RE density of the CSI-RS may be reduced by N times to become the original 1/N, where N may be an integer such as 2, 4, 8, and thus, for CSI-RS of M1 port, it actually represents the CSI-RS port of N*M1. Of course, the value of N, or 1/N, may also be indicated directly to indicate that low density CSI-RS is enabled, and the RE density is the original 1/N.

### Embodiment three

In this embodiment, the second communication node (such as, a base station) may determine the first configuration information and send the first configuration information to the first communication node (such as, a terminal). The terminal may send an uplink reference signal to the base station according to the above, and the base station and the terminal complete the configuration of a reference signal parameter through the following processes.

In process 1, the base station determines a set of reference signal parameters as first configuration information according to a receiving condition of uplink data, and sends the first configuration information to the terminal.

In this embodiment, higher-layer signaling includes, but is not limited to, RRC and MAC CE signaling, such as a demodulation reference signal uplink configuration (DMRS-UplinkConfig) via RRC, for example, signaling related to the reference signal pattern is configured in a DMRS-UplinkConfig, the reference signal pattern includes, but not limited to, an enumeration of several fixed reference signal patterns, for example, Type3 is added to represent a low density pattern of the IDFM technology, and Type4 is used to represent a FD-OCC-based low density pattern, where the low density pattern means that: in case of IDFM-based, a number of REs occupied each DMRS port on each symbol on each PRB is less than 6 REs, such as 2 REs, 3 REs, 4 REs; in a case of FD-OCC, a number of REs occupied by each DMRS port on each symbol on each PRB is less than 4 REs, such as 2 REs. It should be appreciated that Type 1 and Type 2 correspond to a first density pattern, and Type3 and Type 4 correspond to a second density pattern.

Moreover, it is also possible to use a separate instruction for indicating a low density pattern (a second density pattern), such as a dmrs-REType instruction, this instruction may be an enumerated type or an integer comb and may be used for indicating the size of the comb, or this instruction is a decimal number and is used for indicating a proportion of DMRS RE corresponding to the second density pattern to DMRS RE corresponding to the first density pattern, for example DMRS RE in the second density pattern is 1/2, 1/3, 1/4 and the like of DMRS RE in the first density pattern.

In addition, each set of configuration information of the base station may further include a reference signal sequence, a reference signal sending period, whether a reference signal has added symbols, and the like.

The base station determines whether the second density pattern is suitable for use according to its own capability and the receiving condition of the uplink data, for example, whether the artificial intelligence estimation channel is supported, whether the received channel has a large time-varying characteristic or frequency-domain selective fading, and whether a SINR is sufficiently high. If the time-varying of the channel is large, or the frequency-domain selective fading changes rapidly, or the SINR is less than a set threshold, or the artificial intelligence estimation channel is not supported, then the configuration information including the first density pattern is selected as the target configuration information; otherwise, the configuration information including the second density pattern is selected as the target configuration information.

The base station may also determine the reference signal sending period according to the channel change speed, and determine whether additional symbols for sending the reference signal need to be added according to the moving speed. A set of reference channel parameter configurations are determined according to these channel information, that is, the first configuration information, and the first configuration information is transmitted to the terminal.

In process 2, the terminal receives the first configuration information transmitted by the base station, and sends a reference signal according to the first configuration information.

The terminal receives the first configuration information of the base station through at least one of the higher-layer signaling or the physical layer signaling, a value of each parameter of the reference signal is obtained according to the first configuration information, and the reference signal is sent.

In process 3, the base station receives the reference signal according to the first configuration information.

The base station determines a time-frequency resource and a received slot of the reference signal according to the first configuration information configured by the base station, receives the reference signal sent by the terminal on the determined slot and the time-frequency resource, estimates channel information Hp corresponding to the reference signal according to a reference signal sequence, a port configuration, and the like, estimates a channel Hd corresponding to an RE for transmitting signaling or data according to the channel information Hp, and demodulates data or signaling on the RE according to the Hd.

It should be noted that the reference signal used in this embodiment may be an uplink DMRS, which is also applicable to a sounding reference signal (SRS), only the DMRS-UplinkConfig in the RRC configuration signaling needs to be changed to a sounding reference signal resource configuration (SRS-Resource), and a sounding reference signal RE type (SRS-REType) is added so as to indicate whether the low density SRS is enabled. If enabled, the RE density of the SRS may be reduced by N times to become the original 1/N, where N may be an integer such as 1, 2, 4, 8, and thus, for SRS of M1 port, it actually represents the SRS port of N*M1. Of course, the value of N, or 1/N, may also be indicated directly to indicate that low density CSI-RS is enabled, and the density is the original 1/N.

### Embodiment four

In this embodiment, the performance of channel estimation in an artificial intelligence application scenario is improved by configuring reference signal patterns of various densities.

For an estimation channel based on artificial intelligence (AI, where the machine learning (ML) and the deep learning are only one of the artificial intelligence, a few REs may be used to recover a channel of 168 REs of the entire PRB. For example, 168 REs are recovered by using REs such as Nk = 4, 8, and 12. However, in the conventional non-AI method, when Nk is relatively small, the information lost is generally more but the overhead of DMRS is small; when Nk is relatively large, the information lost is less but the overhead is large.

This embodiment combines reference signal patterns of various densities so as to improve the channel estimation performance. A reference signal pattern corresponds to a reference signal RE density. For convenience of description, a pattern of an original NR or LTE-based reference signal density is referred to as the first density pattern, and a reference signal pattern with a density lower than the density of REs of the first density pattern is referred to as the second density pattern. Generally, a number of reference signals (referred to as a first reference signal) corresponding to the first density pattern is N times of a number of reference signals (referred to as a second reference signal) corresponding to the second density pattern in terms of RE corresponding to each port in each PRB, where N may be 2, 3, 4, 6, 1.5 and the like, and N > 1.

In an example, the base station may periodically, semi-continuously, and aperiodically send the first reference signal. If the first reference signal is periodic, then the base station needs to send a sending period T of the reference signal or slot bias information to the terminal. The terminal receives the first reference signal in every T slots after the slot offset. If the first reference signal is semi-continuous, then the base station needs to send the period T of the reference signal and the slot offset to the terminal, the base station activates or deactivates the first reference signal through higher-layer signaling or physical layer signaling, and the terminal receives the first reference signal according to the period and offset configured by the base station and the activation signaling. If the base station sends a non-periodic first reference signal, then the terminal needs to send a signaling based on its own channel estimation so as to trigger the base station to send the first reference signal. After the base station receives the trigger signaling from the terminal, the base station sends the first reference signal after a predetermined slot.

In an example, by default, the base station sends a second reference signal at each slot. If the terminal has a strong AI processing capability, then the base station may also send a periodic or semi-persistent or non-periodic new second reference signal, so that a sending method of the second reference signal is the same as a sending method of the first reference signal, and details will not be repeated here.

In an example, the base station correlates the first reference signal and the second reference signal in a manner of a signaling notification or a convention, that is, the first reference signal is in correlation with the second reference signal. For example, at least one of the following agreements is made: a) a first reference signal and a second reference signal having a same precoding are correlated; b) a first reference signal and a second reference signal having a same quasi-co-location configuration are correlated; c) a first reference signal and a second reference signal having a same Transmission Configuration Indicator are correlated; d) a first reference signal and a second reference signal having a same Transmission Configuration Indicator state are correlated; e) a first reference signal and a second reference signal having a same quasi-co-location type are correlated; f) a first reference signal and a second reference signal having a same port index are correlated; g) a first reference signal and a second reference signal sent to a same terminal are correlated.

In a preferred example, the channel estimation module includes at least two sub-channel estimation modules, where the first sub-channel estimation module uses the second reference signal as input or uses the channel H2 corresponding to the second reference signal as input and outputs channel estimation information H1'. The second sub-channel estimation module uses the first reference signal as input or uses the channel H1 corresponding to the first reference signal as input. Optionally, H1' and H1 are added linearly as an input to the second sub-channel estimation module; or H1' and H1 are cascaded as an input to the second sub-channel estimation module. Finally, the second sub-channel estimation module outputs channel estimation information of physical resource blocks of the corresponding slots.

In a preferred example, the quality of the AI channel estimate may be determined according to the first reference signal and the second reference signal. For example, the first reference signal includes L1 REs, and a channel H1 of the L1 REs is acquired. The second reference signal includes L2 REs, a channel H2 of the L2 REs is acquired, and H1 and H2 are used as inputs of the AI channel estimation module. For example, H2 is input to the first sub-channel estimation module and output as H1', and H1' is used as an input to the second value channel module. Optionally, H1' and H1 are added linearly or cascaded to be an input to the second sub-channel module and an output of H3.

A difference set between the channels on H1 corresponding to the L1 REs and the H2 corresponding to the L2 REs is the channels Hp on L1 to L2 REs. The channel Hp' of the RE corresponding to Hp is obtained from H3, and the loss of Hp and Hp' is compared, when the loss is less than the threshold value, the channel estimation quality of the AI is considered to be good, otherwise, the channel estimation quality of the AI is considered to be poor. When the channel estimation quality is poor, the conventional channel estimation method needs to be used, or the AI model needs to be retrained. Where the loss includes, but is not limited to, the calculation of the mean square error of Hp and Hp ', the calculation of the norm of the difference of Hp and Hp ', or the calculation of the distance of Hp and Hp ', and the like. On this basis, the terminal may determine the channel estimation quality and send the channel estimation quality to the base station, so that the training of the AI model is achieved by using the reference signal patterns of different densities and the reference signals. When the channel estimation quality is good, the AI is used for channel estimation, so that the accuracy of the channel estimation is improved. When the channel estimation quality is not good, the conventional channel estimation method is used, so that the robustness of the channel estimation is ensured.

In some embodiments, the data may also be demodulated with the estimated DMRS, and the quality of the AI channel estimation is represented by the correctness of the demodulation such as a bit error rate, a block error rate, and the like. When the bit error rate or the block error rate is more than the price, the conventional channel estimation method is returned, otherwise, the AI channel estimation method is used.

An embodiment of the present application further provides a reference signal sending method. FIG. 4 is a flowchart of a reference signal sending method according to an embodiment. As shown in FIG. 4, the method provided in this embodiment includes process 210 and process 220.

In process 210, first configuration information is sent, where the first configuration information includes a reference signal pattern.

In process 220, a reference signal is sent according to the first configuration information.

In this embodiment, a second communication node may notify a first communication node of the reference signal pattern by sending the first configuration information, so that the first communication node specifies a port and an RE and the like corresponding to the reference signal. On this basis, the reference signal sent by the second communication node according to the reference signal pattern can be accurately received by the first communication node. Moreover, various reference signal patterns may be supported in a wireless communication process, thereby improving the flexibility of the transmission of the reference signal.

In an embodiment, before process 210, the method further includes processes described below.

In process 201, second configuration information is sent, where the second configuration information includes M sets of configuration information, and M is an integer greater than 1.

In process 203, a configuration information index is received, and one set of configuration information is selected from the second configuration information as target configuration information according to the configuration information index, where the target configuration information is one set of configuration information in the second configuration information.

In process 205, the first configuration information is determined according to the target configuration information.

In an embodiment, the first configuration information and the target configuration information include at least one reference signal parameter having a same value, the first configuration information includes at least one reference signal parameter, and the target configuration information includes at least one reference signal parameter.

In an embodiment, before process 210, the method further includes processes described below.

In process 211, target configuration information sent by the first communication node is received.

In process 213, the first configuration information is determined according to the target configuration information.

In an embodiment, the first configuration information further includes at least one of: a reference signal sending period, slot bias information, a reference signal sequence, reference signal transmission power, or indication information for adding a position symbol to the reference signal.

In an embodiment, the reference signal pattern at least includes a first density pattern and a second density pattern.

In an embodiment, a number of reference signal REs corresponding to the second density pattern is less than a number of reference signal REs corresponding to the first density pattern.

In an embodiment, a first reference signal corresponding to the first density pattern is triggered or activated by trigger signaling or activation signaling.

In an embodiment, a reference signal RE density corresponding to the first density pattern is N times a reference signal RE density corresponding to the second density pattern, and N > 1.

In an embodiment, the first reference signal corresponding to the first density pattern is in correlation with the second reference signal corresponding to the second density pattern.

In an embodiment, the first reference signal corresponding to the first density pattern being in correlation with the second reference signal corresponding to the second density pattern, and the correlation includes at least one of: a first reference signal and a second reference signal having a same precoding are correlated; a first reference signal and a second reference signal having a same quasi-co-location configuration are correlated; a first reference signal and a second reference signal having a same Transmission Configuration Indicator are correlated; a first reference signal and a second reference signal having a same Transmission Configuration Indicator state are correlated; a first reference signal and a second reference signal having a same quasi-co-location type are correlated; a first reference signal and a second reference signal having a same port index are correlated; or a first reference signal and a second reference signal sent to a same terminal are correlated.

In an embodiment, after process 220, the method further includes a process described below.

In process 230, channel estimation quality sent by a first communication node is received, where the channel estimation quality is determined by the first communication node according to the first reference signal corresponding to the first density pattern and the second reference signal corresponding to the second density pattern.

An embodiment of the present application further provides a reference signal receiving device. FIG. 5 is a schematic structural diagram of a reference signal receiving device according to an embodiment. As shown in FIG. 5, the reference signal receiving device includes an information receiving module 310 and a signal receiving module 320. The information receiving module 310 is configured to receive first configuration information, where the first configuration information includes a reference signal pattern. The signal receiving module 320 is configured to receive a reference signal according to the first configuration information.

According to the reference signal receiving device in this embodiment, ports and REs and the like corresponding to the reference signal may be specified according to the first configuration information, so that the reference signal may be accurately received. On this basis, various reference signal patterns may be supported in a wireless communication process, and transmission of the reference signal is more flexible.

In an embodiment, the device further includes an acquisition module and a selection module. The acquisition module is configured to acquire second configuration information, where the second configuration information includes M sets of configuration information, and M is an integer greater than 1. The selection module is configured to select one set of configuration information from the second configuration information as target configuration information, where the target configuration information is used to determine the first configuration information.

In an embodiment, the first configuration information includes at least one reference signal parameter, the target configuration information includes at least one reference signal parameter, and the first configuration information and the target configuration information include at least one reference signal parameter information having a same value.

In an embodiment, the apparatus further includes a target sending module. The target sending module is configured to send target configuration information, and the target configuration information is used to determine the first configuration information.

In an embodiment, the first configuration information is determined by a second communication node.

In an embodiment, the first configuration information further includes at least one of a reference signal sending period, slot bias information, a reference signal sequence, reference signal transmission power, or indication information for adding a position symbol to the reference signal.

In an embodiment, the reference signal pattern at least includes a first density pattern and a second density pattern.

In an embodiment, a number of reference signal REs corresponding to the second density pattern is less than a number of reference signal REs corresponding to the first density pattern.

In an embodiment, the apparatus further includes a trigger module. The trigger module is configured to send trigger signaling or activation signaling, where the trigger signaling or the activation signaling is used to trigger or activate a first reference signal corresponding to the first density pattern.

In an embodiment, the reference signal RE density corresponding to the first density pattern is N times the reference signal RE density corresponding to the second density pattern, and N > 1.

In an embodiment, the first reference signal corresponding to the first density pattern and the second reference signal corresponding to the second density pattern have at least one of the following correlations: a first reference signal and a second reference signal having a same precoding are correlated; a first reference signal and a second reference signal having a same quasi-co-location configuration are correlated; a first reference signal and a second reference signal having a same port index are correlated; or a first reference signal and a second reference signal sent to a same terminal are correlated.

In an embodiment, the apparatus further includes a first determination module. The first determination module is configured to determine a channel estimation quality according to a first reference signal corresponding to the first density pattern and a second reference signal corresponding to the second density pattern.

In an embodiment, the apparatus further includes a second determination module. The second determination module is configured to determine a demodulation channel according o the first reference signal corresponding to the first density pattern and the second reference signal corresponding to the second density pattern.

In an embodiment, the second determination module includes an estimation unit, an input unit and a determination unit. The estimation unit is configured to performing, by a first sub-channel estimation module, a channel estimation on the second reference signal to obtain channel estimation information. The input unit is configured to linearly add or concatenate the channel estimation information and channel estimation information corresponding to the first reference signal as an input of a second sub-channel estimation module. The determination unit is configured to determine the demodulation channel according to an output of the second sub-channel estimation module.

The reference signal receiving device provided in this embodiment and the reference signal receiving method provided in the above-described embodiments belong to the same inventive concept. For technical details not described in detail in this embodiment, reference may be made to any of the above-described embodiments, and this embodiment has the same beneficial effect as the execution of the reference signal receiving method.

An embodiment of the present application further provides a reference signal sending device. FIG. 6 is a schematic structural diagram of a reference signal sending device according to an embodiment. As shown in FIG. 6, the reference signal sending device includes an information sending module 410 and a signal sending module 420. The information sending module 410 is configured to send first configuration information, where the first configuration information includes a reference signal pattern. The signal sending module 420 is configured to send a reference signal according to the first configuration information.

According to the reference signal receiving device in this embodiment, the first configuration information is sent, the reference signal pattern may be notified to first communication node, so that the first communication node specifies ports and REs, and the like corresponding to the reference signal. On this basis, the reference signal sent according to the reference signal pattern may be accurately received by the first communication node. Moreover, various reference signal patterns may be supported in a wireless communication process, thereby improving the flexibility of the transmission of the reference signal.

In an embodiment, the device further includes a sending module, a receiving module and a first determination module. The sending module is configured to send second configuration information, where the second configuration information includes M sets of configuration information, and M is an integer greater than 1. The receiving module is configured to receive a configuration information index and select, according to the configuration information index, one set of configuration information from the second configuration information as target configuration information, where the target configuration information is one set of configuration information in the second configuration information. The first determination module is configured to determine the first configuration information according to the target configuration information.

In an embodiment, the first configuration information and the target configuration information include at least one reference signal parameter having a same value, the first configuration information includes at least one reference signal parameter, and the target configuration information includes at least one reference signal parameter.

In an embodiment, the device further includes a target receiving module and a second determination module. The target receiving module is configured to receive target configuration information sent by the first communication node. The second determination module is configured to determine the first configuration information according to the target configuration information.

In an embodiment, the first configuration information further includes at least one of: a reference signal sending period, slot bias information, a reference signal sequence, reference signal transmission power, or indication information for adding a position symbol to the reference signal.

In an embodiment, the reference signal pattern at least includes a first density pattern and a second density pattern.

In an embodiment, a number of reference signal REs corresponding to the second density pattern is less than a number of reference signal REs corresponding to the first density pattern.

In an embodiment, a first reference signal corresponding to the first density pattern is triggered or activated by trigger signaling or activation signaling.

In an embodiment, an RE density corresponding to the first density pattern is N times an RE density corresponding to the second density pattern, and N > 1.

In an embodiment, the first reference signal corresponding to the first density pattern and the second reference signal corresponding to the second density pattern have at least one of the following correlations: a first reference signal and a second reference signal having a same precoding are correlated; a first reference signal and a second reference signal having a same quasi-co-location configuration are correlated; a first reference signal and a second reference signal having a same port index are correlated; or a first reference signal and a second reference signal sent to a same terminal are correlated.

In an embodiment, the device further includes a quality receiving module. The quality receiving module is configured to receive channel estimation quality sent by the first communication node, where the channel estimation quality is determined by the first communication node according to a first reference signal corresponding to the first density pattern and a second reference signal corresponding to the second density pattern.

The reference signal receiving device provided in this embodiment and the reference signal receiving method provided in the above-described embodiments belong to the same inventive concept. For technical details not described in detail in this embodiment, reference may be made to any of the above-described embodiments, and this embodiment has the same beneficial effect as the execution of the reference signal receiving method.

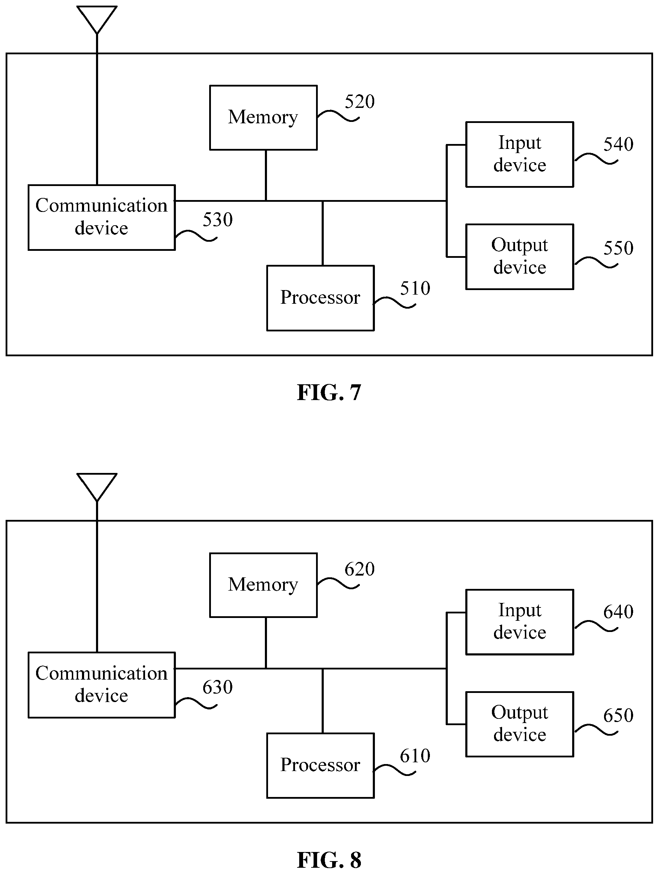

An embodiment of the present application further provides a first communication node. FIG. 7 is a schematic diagram of a hardware structure of a first communication node according to an embodiment. As shown in FIG. 7, the first communication node provided in the present application includes a memory 520, a processor 510, and a computer program stored on the memory and operable on the processor. The program, when executed by the processor 510, implements the reference signal receiving method described above.

The first communication node may further include a memory 520. The processor 510 in the first communication node may be one or more, for example, one processor 510 is used as an example in FIG. 7. The memory 520 is configured to store one or more programs. The one or more programs are executed by the one or more processors 510 so that the one or more processors 510 implement the reference signal receiving method described in the embodiments of the present application.

The first communication node further includes a communication device 530, an input device 540 and an output device 550.

The processor 510, the memory 520, the communication device 530, the input device 540 and the output device 550 in the first communication node may be connected by a bus or otherwise, for example, connected by a bus in FIG. 7.

The input device 540 may be configured to receive input numeric or character information and to generate a key signal input related to user settings and functional controls of the first communication node. The output device 550 may include a display device such as a display screen.

The communication device 530 may include a receiver and a sender. The communication device 530 is configured to perform an information receiving and sending communication according to the control of the processor 510.

The memory 520, as a computer-readable storage medium, may be provided to store a software program, a computer-executable program, and a module, such as a program instruction/module corresponding to the reference signal receiving method described in the embodiments of the present application (such as, the information receiving module 310 and the signal receiving module 320 in the reference signal receiving device). The memory 520 may include a storage program region and a storage data region. The storage program region may store an operating system, an application program required for at least one function. The storage data region may store data and the like created according to the use of the first communication node. Moreover, the memory 520 may include a high-speed random access memory, and may further include a non-volatile memory such as at least one magnetic disk storage device, flash memory device, or other non-volatile solid state storage devices. In some instances, the memory 520 may further include a memory remotely disposed relative to the processor 510, and these remote memories may be connected to the first communication node via a network. Instances of such networks include, but are not limited to, an Internet, an intranet, a local area network, a mobile communication network, and combinations thereof.

An embodiment of the present application further provides a second communication node. FIG. 8 is a schematic diagram of a hardware structure of a second communication node according to an embodiment. As shown in FIG. 8, the second communication node provided in the present application includes a memory 620, a processor 610, and a computer program stored on the memory and operable on the processor. The program, when executed by the processor 610, implements the reference signal sending method described above.

The second communication node may further include a memory 620. The processor 610 in the second communication node may be one or more, for example, one processor 610 is used as an example in FIG. 8. The Memory 620 is configured to store one or more programs. The one or more programs are executed by the one or more processors 610 so that the one or more processors 610 implement the reference signal sending method described in the embodiments of the present application.

The second communication node further includes a communication device 630, an input device 640, and an output device 650.

The processor 610, the memory 620, the communication device 630, the input device 640, and the output device 650 in the second communication node may be connected by a bus or otherwise, for example, connected by a bus in FIG. 8.

The input device 640 may be used to receive input numeric or character information and to generate a key signal input related to user settings and functional controls of the second communication node. The output device 650 may include a display device such as a display screen.

The communication device 630 may include a receiver and a sender. The communication device 630 is configured to perform an information receiving and sending communication according to the control of the processor 610.

The memory 620, as a computer-readable storage medium, may be provided to store a software program, a computer-executable program, and modules, such as program instructions/modules corresponding to the reference signal sending method described in the embodiments of the present application (such as, the information receiving module 310 and the signal receiving module 320 in the reference signal sending device). The memory 620 may include a storage program region and a storage data region. The storage program region may store an operating system, an application program required for at least one function. The storage data region may store data and the like created according to the use of the second communication node. Moreover, the memory 620 may include a high-speed random access memory, and may further include a non-volatile memory, such as at least one magnetic disk storage device, flash memory device, or other non-volatile solid state storage devices. In some instances, the memory 620 may further include a memory disposed remotely relative to the processor 610, and these remote memories may be connected to the second communication node via a network. Instances of such networks include, but are not limited to, an Internet, an intranet, a local area network, a mobile communication network, and combinations thereof.

An embodiment of the present application further provides a storage medium. The storage medium stores a computer program, the computer program, when executed by a processor, implements the reference signal receiving method or the reference signal sending method described in any one of the embodiments of the present application. The reference signal receiving method includes that: first configuration information is received, where the first configuration information includes a reference signal pattern; and a reference signal is received according to the first configuration information. The reference signal sending method includes that: first configuration information is sent, the first configuration information includes a reference signal pattern; and a reference signal is sent according to the first configuration information.

The computer storage media of the embodiments of the present application may adopt any combination of one or more computer-readable media. The computer-readable medium may be a computer-readable signal medium or a computer-readable storage medium. The computer-readable storage medium may be, for example, but not limited to, an electronic, magnetic, optical, electromagnetic, infrared, or semiconductor system, apparatus, or device, or any combination of the foregoing. More specific examples (a non-exhaustive list) of the computer-readable storage medium include: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In this context, the computer-readable storage medium may be any tangible medium that contains or stores a program, and this program may be used by or in conjunction with an instruction execution system, apparatus, or device.

The computer-readable signal medium may include signal data propagated in a baseband or as part of a carrier wave, and the data signal carries a computer-readable program code. Such the propagated data signal may adopt a variety of forms, including, but not limited to: an electromagnetic signal, an optical signal, or any suitable combination of the foregoing. The computer-readable signal medium may be any computer-readable medium that is not a computer-readable storage medium and that may send, propagate, or transmit a program for use by or in connection with an instruction execution system, apparatus, or device.

Program codes embodied on the computer-readable medium may be transmitted using any appropriate medium, including but not limited to: wireless, wire, optic cable, radio frequency (RF), etc., or any suitable combination of the foregoing.

A computer program code for performing the operations of the present application may be written in one or more programming languages or combinations thereof, the described programming languages include an object-oriented programming language-such as Java, Smalltalk, C++, and further include a conventional procedural programming language-such as a "C" language or similar programming language. The program code may be executed in following manners: executed entirely on a user's computer, executed partly on the user's computer, executed as an independent software package, executed partly on the user's computer and partly on a remote computer, or executed entirely on the remote computer or a server. In a case where the remote computer is involved, the remote computer may be connected to the user's computer through any kind of network, including a local area network (LAN) or a wide area network (WAN), or may be connected to an external computer (for example, connected to the external computer through an internet provided by an internet service provider).

The above description is only an exemplary embodiment of the present application, and is not intended to limit the scope of protection of the present application.

It should be understood by those skilled in the art that the term "user equipment" covers any suitable type of wireless user equipment, such as a mobile phone, a portable data processing apparatus, a portable web browser or a vehicle-mounted mobile station.

In general, various embodiments of the present application may be implemented in hardware or special purpose circuits, software, logic or any combination thereof. For example, some aspects may be implemented in hardware, while other aspects may be implemented in firmware or software which may be executed by a controller, microprocessor or other computing apparatus, although the present application is not limited thereto.

The embodiments of the present application may be implemented by a data processor of a mobile apparatus executing computer program instructions, for example in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object codes written in any combination of one or more programming languages.

Any block diagram of the logic flow in the accompanying drawings of the present application may represent program processes, or may represent interconnected logic circuits, modules, and functions, or may represent a combination of program processes and logic circuits, modules, and functions. The computer program may be stored on a memory. The memory may be of any type suitable for the local technical environment and may be implemented using any suitable data storage technology, such as, but not limited to, a read-only memory (ROM), a random access memory (RAM), an optical memory device and system (digital versatile disc (DVD) or compact disk (CD)), and the like. Computer-readable media may include non-instantaneous storage media. Data processors may be of any type suitable for the local technical environment, such as, but not limited to, general-purpose computers, specialized computers, microprocessors, digital signal processors (DSP), application specific integrated circuits (ASIC), field-programmable gate array (FPGA)), and processors based on multi-core processor architectures.

## Claims

1. A reference signal receiving method, comprising:
receiving first configuration information, wherein the first configuration information comprises a reference signal pattern; and
receiving a reference signal according to the first configuration information.

2. The method of claim 1, further comprising:
acquiring second configuration information, wherein the second configuration information comprises M sets of configuration information, and M is an integer greater than 1; and
selecting one set of configuration information from the second configuration information as target configuration information, wherein the target configuration information is used to determine the first configuration information.

3. The method of claim 2, wherein the first configuration information and the target configuration information comprise at least one reference signal parameter having a same value, the first configuration information comprises at least one reference signal parameter, and the target configuration information comprises at least one reference signal parameter.

4. The method of claim 2, further comprising:
sending target configuration information, wherein the target configuration information is used to determine the first configuration information.

5. The method of claim 1, wherein the first configuration information further comprises at least one of: a reference signal sending period, time slot bias information, a reference signal sequence, reference signal sending power, or indication information for adding a position symbol to the reference signal.

6. The method of claim 1, wherein the reference signal pattern at least comprises a first density pattern and a second density pattern.

7. The method of claim 6, wherein a number of reference signal resource elements corresponding to the second density pattern is less than a number of reference signal resource elements corresponding to the first density pattern.

8. The method of claim 7, wherein the number of the reference signal resource elements corresponding to the first density pattern is N times the number of the reference signal resource elements corresponding to the second density pattern, and N > 1.

9. The method of claim 6, further comprising:
sending trigger signaling or activation signaling, wherein the trigger signaling or the activation signaling is used to trigger or activate a first reference signal corresponding to the first density pattern.

10. The method of claim 6, wherein a first reference signal corresponding to the first density pattern is in correlation with a second reference signal corresponding to the second density pattern.

11. The method of claim 10, wherein the first reference signal is in correlation with the second reference signal, and the correlation comprises at least one of:
a first reference signal and a second reference signal having a same precoding are correlated;
a first reference signal and a second reference signal having a same quasi-co-location configuration are correlated;
a first reference signal and a second reference signal having a same Transmission Configuration Indicator are correlated;
a first reference signal and a second reference signal having a same Transmission Configuration Indicator state are correlated;
a first reference signal and a second reference signal having a same quasi-co-location type are correlated;
a first reference signal and a second reference signal having a same port index are correlated;
a first reference signal and a second reference signal sent to a same terminal are correlated.

12. The method of claim 6, further comprising:
determining a channel estimation quality according to a first reference signal corresponding to the first density pattern and a second reference signal corresponding to the second density pattern.

13. The method of claim 12, further comprising:
determining a demodulation channel according to the first reference signal corresponding to the first density pattern and the second reference signal corresponding to the second density pattern.

14. The method of claim 13, wherein determining the demodulation channel according to the first reference signal corresponding to the first density pattern and the second reference signal corresponding to the second density pattern comprises:
performing a channel estimation on the second reference signal through a first sub-channel estimation module to obtain channel estimation information;
linearly adding or concatenating the channel estimation information and channel estimation information corresponding to the first reference signal as an input of a second sub-channel estimation module; and
determining the demodulation channel according to an output of the second sub-channel estimation module.

15. A reference signal sending method, comprising:
sending first configuration information, wherein the first configuration information comprises a reference signal pattern; and
sending a reference signal according to the first configuration information.

16. The method of claim 15, further comprising:
sending second configuration information, wherein the second configuration information comprises M sets of configuration information, and M is an integer greater than 1.

17. The method of claim 16, further comprising:
receiving a configuration information index, and selecting, according to the configuration information index, from the second configuration information, configuration information corresponding to the configuration information index as target configuration information, wherein the target configuration information is one set of configuration information in the second configuration information; and
determining the first configuration information according to the target configuration information.

18. The method of claim 17, wherein the first configuration information and the target configuration information comprises at least one reference signal parameter having a same value, the first configuration information comprises at least one reference signal parameter, and the target configuration information comprises at least one reference signal parameter.

19. The method of claim 15, further comprising:
receiving target configuration information sent by a first communication node; and
determining the first configuration information according to the target configuration information.

20. The method of claim 15, wherein the first configuration information further comprises at least one of: a reference signal sending period, time slot bias information, a reference signal sequence, reference signal sending power, or indication information for adding a position symbol to the reference signal.

21. The method of claim 15, wherein the reference signal pattern at least comprises a first density pattern and a second density pattern.

22. The method of claim 21, wherein a number of reference signal resource elements corresponding to the second density pattern is less than a number of reference signal resource elements corresponding to the first density pattern.

23. The method of claim 21, wherein a first reference signal corresponding to the first density pattern is triggered or activated by trigger signaling or activation signaling.

24. The method of claim 21, wherein a resource element density corresponding to the first density pattern is N times a resource element density corresponding to the second density pattern, and N > 1.

25. The method of claim 24, wherein a first reference signal corresponding to the first density pattern is in correlation with a second reference signal corresponding to the second density pattern.

26. The method of claim 25, wherein the first reference signal is in correlation with the second reference signal, and the correlation comprises at least one of:
a first reference signal and a second reference signal having a same precoding are correlated;
a first reference signal and a second reference signal having a same quasi-co-location configuration are correlated;
a first reference signal and a second reference signal having a same Transmission Configuration Indicator are correlated;
a first reference signal and a second reference signal having a same Transmission Configuration Indicator state are correlated;
a first reference signal and a second reference signal having a same quasi-co-location type are correlated;
a first reference signal and a second reference signal having a same port index are correlated; or
a first reference signal and a second reference signal sent to a same terminal are correlated.

27. The method of claim 21, further comprising:
receiving channel estimation quality sent by a first communication node, wherein the channel estimation quality is determined by the first communication node according to a first reference signal corresponding to the first density pattern and a second reference signal corresponding to the second density pattern.

28. A first communication node, comprising a memory, a processor and a computer program stored on the memory and executable on the processor, wherein the computer program, when executed by the processor, implements the reference signal receiving method of any one of claims 1 to 14.

29. A second communication node, comprising a memory, a processor and a computer program stored on the memory and executable on the processor, wherein the computer program, when executed by the processor, implements the reference signal sending method of any one of claims 15 to 27.

30. A computer-readable storage medium, storing a computer program, wherein the computer program, when executed by a processor, implements the reference signal receiving method of any one of claims 1 to 14 or the reference signal sending method of any one of claims 15 to 27.
